Europäisches Patentamt

European Patent Office

Office européen des brevets

(11) Veröffentlichungsnummer: **0 508 093 A2**

# EUROPÄISCHE PATENTANMELDUNG

(21) Anmeldenummer: **92103547.3**

(22) Anmeldetag: **02.03.92**

(51) Int. Cl.⁵: **H04M 9/00**

(30) Priorität: **09.03.91 DE 4107593**

(43) Veröffentlichungstag der Anmeldung:
**14.10.92 Patentblatt 92/42**

(84) Benannte Vertragsstaaten:
**AT BE CH DE DK ES FR GB GR IT LI LU MC NL PT SE**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Schulte, Friedrich**
**Ruthstrasse 20/22**
**W-4300 Essen 1(DE)**
Erfinder: **Kemmerling, Martin**
**Karl-Siepmann-Strasse 53**
**W-5802 Wetter 2(DE)**

(74) Vertreter: **Feder, Wolf-Dietrich et al**
**Dr. Wolf-D. Feder, Dr. Heinz Feder Dipl.-Ing.**
**P.-C. Sroka Dominikanerstrasse 37**
**W-4000 Düsseldorf 11(DE)**

(54) Verfahren zur Übertragung des Belegungszustandes in einem Kommunikationssystem, insbesondere in einer tastengesteuerten Wechsel- oder Gegen-Lautsprechanlage mit Linienwahl sowie Einrichtung zur Durchführung des Verfahrens.

(57) Verfahren zur Übertragung des Belegungszustandes in einem Kommunikationssystem, insbesondere in einer tastengesteuerten Wechsel- oder Gegen-Lautsprechanlage mit Linienwahl. Gesteuert von einem Vermittlungsrechner (1) werden die Daten über den jeweiligen Belegungszustand aller Teilnehmereinrichtungen als Datenpakete mit einem ersten Takt auf eine Datenleitung (6) gegeben, wobei jedes Datenpaket einen seriellen Bitstrom enthält, in dem jedes Bit den Belegungszustand genau einer Teilnehmereinrichtung repräsentiert und die Bits im Datenpaket in vorgegebener gleichbleibender Reihenfolge mit einen zweiten Takt angeordnet sind. Die Frequenz des zweiten Taktes ist um ein Vielfaches höher als die des ersten Taktes und die Anzahl der einem Datenpaket zugeordneten Taktimpulse ist gleich der Anzahl der Teilnehmereinrichtungen. Die Taktimpulse werden auf eine Taktleitung (7) gegeben. Zur Meldung des Belegungszustandes an eine Teilnehmereinrichtung (5.1-5.n) werden die Daten mit einem ausgewählten Teil der Taktimpulse synchronisiert zur Auswahl der dieser Teilnehmereinrichtung zugeordneten Bits aus dem Datenpaket. Diese Bits werden zur Erzeugung von Steuersignalen verwendet, welche parallel den Anzeigevorrichtungen der Teilnehmereinrichtung zugeführt werden.

EP 0 508 093 A2

FIG.1

Die Erfindung betrifft ein Verfahren zur Übertragung des Belegungszustandes in einem Kommunikationssystem, insbesondere in einer tastengesteuerten Wechsel- oder Gegen-Lautsprechanlage mit Linienwahl sowie eine Einrichtung zur Durchführung dieses Verfahrens.

Das erfindungsgemäße Verfahren geht dabei aus von einem Kommunikationssystem mit den Merkmalen aus dem Oberbegriff des Patentanspruchs 1 und entsprechend die Einrichtung zur Durchführung des Verfahrens von einem Kommunikationssystem mit den Merkmalen aus dem Oberbegriff des Patentanspruchs 7.

Derartige Kommunikationssysteme in Form einer tastengesteuerten Wechsel- oder Gegen-Lautsprechanlage mit Linienwahl sind beispielsweise in DE-PS 28 37 950 und DE-PS 30 00 858 beschrieben.

Bei diesen bekannten Anlagen werden die Meldungen über den Belegungszustand der Teilnehmereinrichtungen von der Zentrale aus, gesteuert vom Vermittlungsrechner,über die Linienleitungen den einzelnen Teilnehmereinrichtungen zugeführt. Der schaltungstechnische Aufwand hierfür ist relativ groß, insbesondere wegen des hohen Verkabelungsaufwandes zwischen der Zentrale und den Teilnehmereinrichtungen und der Tatsache, daß der Vermittlungsrechner zusätzlich mit der Zuordnung und Abgabe der Meldungen über den Belegungszustand an die einzelnen Teilnehmereinrichtungen belastet ist, was insbesondere dann von Bedeutung ist, wenn den einzelnen Teilnehmereinrichtungen sehr unterschiedliche Ausschnitte aus dem Gesamtbelegungszustand der Anlage zugeteilt werden sollen. Weiterhin ist es bei den bekannten Anlagen aufwendig, zusätzliche Teilnehmereinrichtungen hinzuzuschalten oder die Zuweisung von Meldungen über den Belegungszustand eines Teils der übrigen Teilnehmereinrichtungen an einzelnen Teilnehmereinrichtungen zu ändern.

Der Erfindung liegt die Aufgabe zugrunde, ein Verfahren zur Übertragung des Belegungszustandes sowie eine Einrichtung zur Durchführung dieses Verfahrens zu schaffen, bei dem mit vereinfachten schaltungstechnischen Mitteln eine sichere, störungsfreie und sehr variable Zuordnung und Zuführung der Meldungen über den Belegungszustand der Anlage an die einzelnen Teilnehmereinrichtungen möglich ist.

Die Lösung dieser Aufgabe erfolgt erfindungsgemäß mit einem Verfahren, das die Merkmale aus dem kennzeichnenden Teil des Patentanspruchs 1 aufweist. Vorteilhafte Weiterbildungen des Verfahrens sind in den Ansprüchen 2 bis 6 beschrieben. Eine Einrichtung zur Durchführung des erfindungsgemäßen Verfahrens besitzt die Merkmale aus dem kennzeichnenden Teil des Patentanspruchs 7. Vorteilhafte Ausführungsformen dieser Einrichtung sind in den Ansprüchen 8 bis 14 beschrieben.

Der Grundgedanke der Erfindung besteht darin, die in digitaler Form vorliegenden Daten über den Belegungszustand der Anlage soweit wie möglich in digitaler Form und seriell an die Teilnehmereinrichtungen weiterzuleiten.

Dies ist insbesondere bei Wechsel- oder Gegen- Lautsprechanlagen mit Linienwahl von großem Vorteil, weil sich die Struktur der Linienanschaltung erheblich vereinfacht. Die Erfindung ist aber nicht auf derartige Anlagen beschränkt. Insbesondere ist es für das erfindungsgemäße Verfahren und die erfindungsgemäße Einrichtung ohne Bedeutung, wie innerhalb des Kommumikationssystems die Durchschaltung der Ruf- und Verbindungswege erfolgt und ob Ruf- und Sprachsignale analog oder digital übertragen werden.

Wie weiter unten anhand von Ausführungsbeispielen genauer erläutert, haben das erfindungsgemäße Verfahren sowie die erfindungsgemäße Einrichtung folgende Vorteile:

- Alle Teilnehmereinrichtungen im System haben stets Zugriff auf den gesamten Belegungszustand oder den ihnen zugeordneten Teil des Belegungszustandes der Anlage;
- der Vermittlungsrechner ist nicht damit belastet, den Teilnehmereinrichtungen Änderungen im Belegungszustand mitzuteilen;
- in Systemen mit Linienwahl vereinfacht sich die Struktur der Linienanschaltung erheblich;
- durch entsprechende Auswahl der Taktzeiten kann das Verfahren jeder Anlagengröße angepaßt werden;
- Störimpulse auf den Taktleitungen führen nur zu temporären Fehlern, da der Belegungszustand mit jeden Zyklus neu übertragen wird;
- die einfache Struktur der den Teilnehmereinrichtungen zugeordneten Statusempfänger zum Empfang der Meldungen über den Belegungszustand ermöglicht deren Ausbildung als integrierte Schaltkreise, z.B. Implementierung als ASIC;
- die beispielsweise als Ausgänge eines Schieberegisters ausgeführten parallelen Ausgänge der Statusempfänger können räumlich so nahe an die Anzeigevorrichtungen der Teilnehmereinrichtungen herangebracht werden, daß der Verkabelungsaufwand zwischen Zentrale und den Teilnehmereinrichtungen sehr klein bleibt;
- es ist in einfacher Weise möglich, die den einzelnen Teilnehmereinrichtungen zugeführten Daten über den Belegungszustand zusätzlich zu manipulieren, beispielsweise zur Abgabe intermittierender Signale.

Die erfindungsgemäße Einrichtung kann außerordentlich variabel ausgestaltet sein. So kann beispielsweise der der Zentrale zugeordnete Statussender in der Zentrale oder räumlich getrennt von ihr angeordnet sein. Ebenso können die den Teilnehmereinrichtungen zugeordneten Statusempfänger in den Teilnehmereinrichtungen selbst angeordnet sein. Sie können aber auch räumlich getrennt von den Teilnehmereinrichtungen angeordnet sein, beispielsweise in der Zentrale oder irgendwo räumlich zwischen Zentrale und den Teilnehmereinrichtungen.

Im Folgenden werden anhand der beigefügten Zeichnungen Ausführungsbeispiele für das erfindungsgemäße Verfahren und Einrichtungen zur Durchführung dieses Verfahrens näher erläutert.

In den Zeichnungen zeigen:

Fig. 1     in einem stark schematisierten Blockschaltbild den Aufbau eines Kommunikationssystems mit einer Zentrale und n-Teilnehmereinrichtungen;

Fig. 2     in einem Blockschaltbild eine Ausführungsform eines Statussenders für das Kommunikationssystem nach Fig. 1;

Fig. 3     in einem Blockschaltbild eine andere Ausführungsform eines Statussenders für das Kommunikationssystem nach Fig. 1;

Fig. 4     in einem Blockschaltbild eine Ausführungsform eines Statusempfängers für das Kommunikationssystem mit einem Statussender nach Fig. 2;

Fig. 5     eine Ausführungsform des Statusempfängers für das Kommunikationssystem mit einem Statussender nach Fig. 3;

Fig. 6     eine graphische Darstellung des Datenstroms sowie der Taktsignale im Kommunikationssystem bei der Ausführungsform nach Fig. 2 und 4;

Fig. 7     eine graphische Darstellung des Datenstroms und der den einzelnen Teilnehmereinrichtungen zugeordneten Taktsignale im Kommunikationssystem bei einer Ausführungsform nach Fig. 3 und 5.

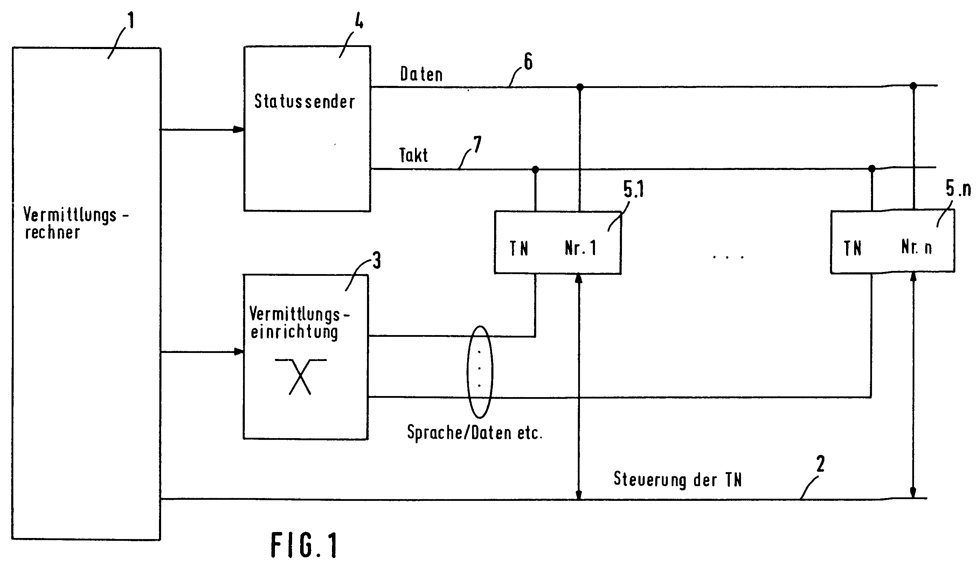

Fig. 1 zeigt im Blockschaltbild ein Kommunikationssystem mit einem in einer Zentrale angeordneten Vermittlungsrechner 1, der über Steuerleitungen 2 mit den Teilnehmereinrichtungen (TN) 5.1 bis 5.n verbunden ist und eine Vermittlungseinrichtung 3 steuert, die Sprach- bzw. Datenverbindungen zwischen den Teilnehmereinrichtungen 5.1 bis 5.n durchschaltet. Die genauere Art der Steuerung und Durchschaltung sowie die Art der Signalübertragung über die Steuerleitungen und zwischen Vermittlungseinrichtung und Teilnehmereinrichtungen wird im folgenden nicht näher erläutert, da sie für die Übertragung des Belegungszustandes ohne Bedeutung ist. Es genügt die Feststellung, daß der Vermittlungsrechner über die Steuerleitungen 2 von jeder Teilnehmereinrichtung 5.1 bis 5.n Informationen über den augenblicklichen Belegungszustand der Teilnehmereinrichtung erhält.

Der Vermittlungsrechner 1 ist mit dem Statussender 4 verbunden, dem er die Belegungsänderungen bei allen Ereignissen, die Einfluß auf den Belegungszustand haben, beispielsweise Verbindungsauf- und abbau, mitteilt.

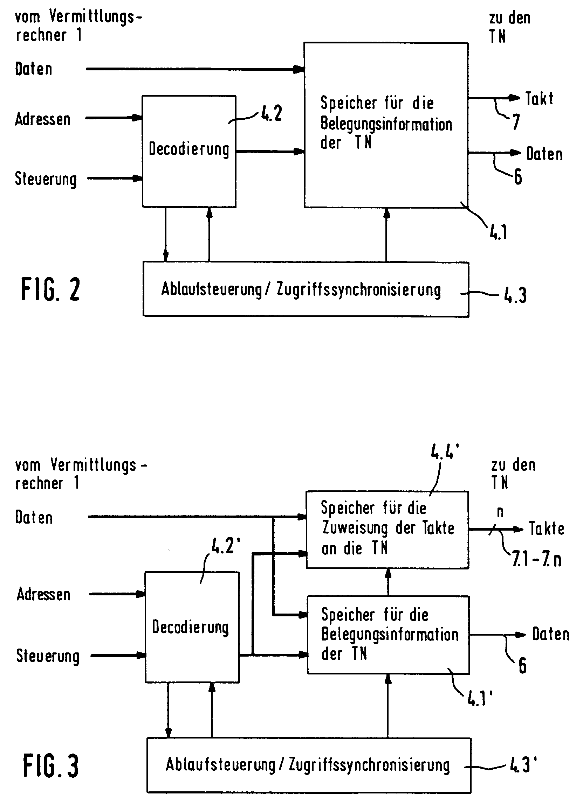

Der Statussender 4 besitzt in einer ersten in Fig. 2 dargestellten Ausführungsform einem Speicher 4.1 für die Belegungsinformation der Teilnehmereinrichtungen (TN) sowie Vorrichtungen 4.2 zur Decodierung von Steuersignalen und Adressen und 4.3 zur Ablaufsteuerung und Zugriffssynchronisierung des Speichers 4.1. Vom Vermittlungsrechner erhält der Statussender 4 Daten, Adressen und Steuersignale.

Wie aus Fig. 1 zu ersehen, ist der Statussender 4 über eine synchrone serielle Übertragungsstrecke, bestehend aus einer Datenleitung 6 sowie einer Taktleitung bzw. Taktleitungen 7, mit den Teilnehmereinrichtungen 5.1 bis 5.n verbunden. Über diese Verbindung versorgt der Statussender 4 ohne Zusammenwirken mit anderen Systemkomponenten die Teilnehmereinrichtungen 5.1 bis 5.n mit Informationen über den Belegungszustand des gesamten Kommunikationssystems.

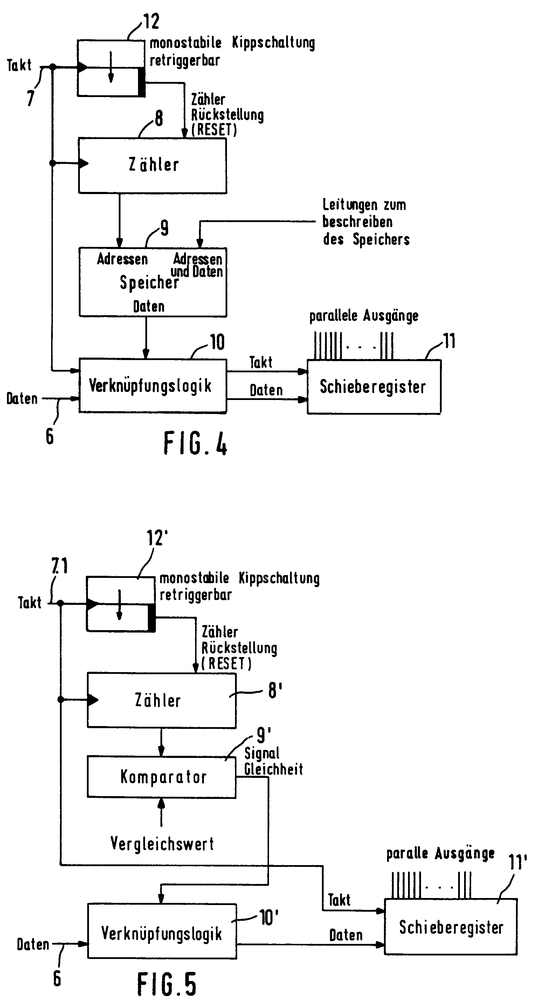

Die Teilnehmereinrichtungen 5.1 bis 5.n enthalten in einem ersten Ausführungsbeispiel einen in Fig. 4 näher dargestellten Statusempfänger. Die übrigen mit einer Teilnehmereinrichtung verknüpften Vorrichtungsteile sind in den Zeichnungen nicht dargestellt und werden im folgenden nicht beschrieben. Es genügt festzuhalten, daß in jeder Teilnehmereinrichtung Anzeigevorrichtungen für den Belegungszustand der übrigen Teilnehmereinrichtungen oder eines Teils der übrigen Teilnehmereinrichtungen vorhanden sind, die beispielsweise bei einer üblichen Wechsel-Lautsprechanlage als Lampenfeld bzw. TastenLampenfeld ausgebildet sein können. Im folgenden wird davon ausgegangen, daß sich die Statusempfänger in oder unmittelbar an den Teilnehmereinrichtungen befinden. Es wurde jedoch bereits darauf hingewiesen, daß dies nicht zwingend ist.

Bei dem Ausführungsbeispiel nach Fig. 2 und 4 sind alle Teilnehmereinrichtungen bzw. deren Statusempfänger an eine gemeinsame Taktleitung 7 und eine gemeinsame Datenleitung 6 angeschlossen und erhalten somit grundsätzlich die gesamte vom Statussender abgegebene Belegungsinformation. Die Statusempfänger können wahlweise die gesamte Belegungsinformation oder nur den für die einzelne Teilnehmereinrichtung relevanten Teil der Belegungsinformation aus den ihnen zugesandten Daten entnehmen.

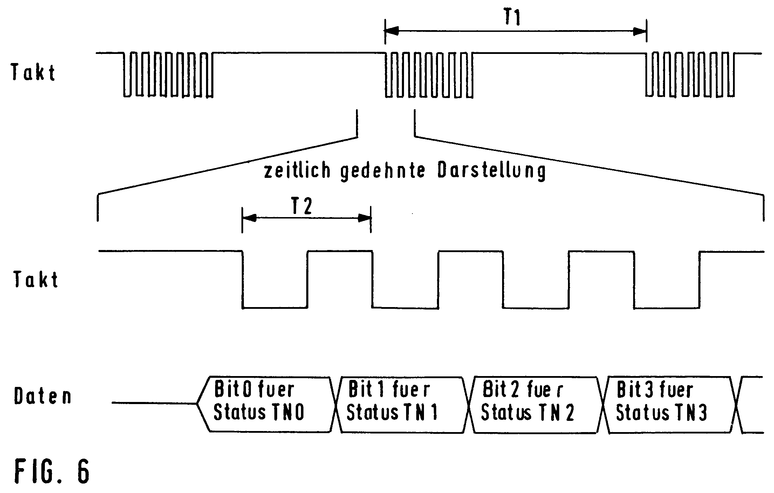

Hierzu werden vom Statussender 4 über die Datenleitung 6 Daten und über die Taktleitung 7 Taktimpulse ausgesendet. Dabei werden aus dem Speicher 4.1 die Daten auf die Datenleitung 6 in Form eines seriellen Bitstroms gegeben, in dem jedes Bit dem Belegungszustand genau einer Teilnehmereinrichtung repräsentiert, d.h. die Datenleitung 6 nimmt in Abhängigkeit vom Belegungszustand der Teilnehmereinrichtungen den Wert 0 oder 1 an. Zu jedem Datenbit wird auf die Taktleitung 7 ein Taktimpuls ausgegeben. Der komplette Belegungsstatus der Anlage wird daher in einem Datenpaket mit soviel Takten wie Teilnehmereinrichtungen vorhanden sind übertragen. Dabei bestimmt ein erster Takt T1 die Zeit, in der die Statusempfänger ein Datenpaket, also eine komplette neue Belegungsinformation, erhalten haben. Innerhalb des Datenpakets sind die Bits in vorgegebener gleichbleibender Reihenfolge mit einem zweiten Takt T2 angeordnet. Die Frequenz des zweiten Taktes ist um ein Vielfaches höher als die Frequenz des ersten Taktes. In Fig. 6 ist das Zeitverhalten der Takte und Daten dargestellt. Zweckmäßigerweise sind die Größen T1 und T2 so gewählt, daß bei einer Zahl n Teilnehmereinrichtungen gilt:

$$n \cdot T2 < T1,$$

so daß nach dem eigentlichen Datenpaket eine vorgegebene Pause entsteht bevor der nächste Zyklus des ersten Taktes T1 wieder einsetzt.

Bei jeder Belegungsänderung der Anlage verändert der Vermittlungsrechner 1 im Speicher 4.1 das zugehörige Bit, so daß beim zyklischen Auslesen des Speichers mit dem ersten Takt T1 sich die einzelnen Belegungsdaten im Datenstrom entsprechend ändern.

Der in Fig. 4 dargestellte Statusempfänger besitzt einen Zähler 8, in den die über die Taktleitung 7 eintreffenden Taktimpulse gezählt werden und mittels der Zählnummer ein Speicher 9 adressiert wird. Dieser Speicher 9 enthält für jeden Taktimpuls des Datenpaketes einen Dateneintrag, wobei jeweils ein Bit dieses Dateneintrags entscheidet, ob der zugehörige Taktimpuls in der an den Speicher 9 angeschlossenen Verknüpfungslogik 10 unterdrückt wird oder zum Takten eines Schieberegisters 11 weitergeleitet wird, so daß nur die diesen ausgewählten Taktimpulsen zugeordneten Datenbits in das Schieberegister 11 eintreten. Der Inhalt des Speichers 9 stellt demgemäß ein Taktmuster dar, mit dem die eintreffenden Takte zur Erzeugung einer beliebigen Auswahl aus dem gesamten Belegungsstatus der Anlage verglichen werden. An den parallelen Ausgängen des Schieberegisters 11 steht die Belegungsinformation der mittels des Speichers 9 ausgewählten übrigen Teilnehmereinrichtungen zur Verfügung. An diese Ausgänge sind in nicht eigens dargestellter Weise die Anzeigevorrichtungen der Teilnehmereinrichtung angeschlossen.

Mit den weiteren Bits aus den im Speicher 9 gespeicherten Daten können zusätzlich beliebige logische Verknüpfungen mit den über die Datenleitung 6 eintreffenden seriell übertragenen Bits realisiert werden. So können diese Bits beispielsweise in der Verknüpfungslogik 10 mit einem zusätzlichen beliebigen Takt verknüpft werden, so daß intermittierende Belegungsinformationen, beispielsweise blinkende Lampen, an den Anzeigevorrichtungen der Teilnehmereinrichtung erzeugt werden können (z.B. für die Linienanzeige bei Wechsel- und Lautsprechanlagen mit Linienwahl).

Jeweils nach dem Abschluß der Bearbeitung eines Datenpaketes muß der Zähler 8 auf 0 rückgestellt werden. Dies geschieht mittels einer monostabilen Kippschaltung 12, der die Taktimpulse über die Taktleitung 7 zugeführt werden und deren Ausgang mit dem Rückstelleingang des Zählers 8 verbunden ist. Diese monostabile Kippschaltung 12 ist so eingestellt, daß sie in der aus Fig. 6 zu entnehmenden Pause zwischen dem eigentlichen Datenpaket und dem Wiederbeginn des nächsten Zyklus in den Ruhezustand zurückfällt und dadurch die Rückstellung auslöst.

Die anhand der Fig. 2 und 4 beschriebene Ausführungsform der Einrichtung und des Verfahrens zur Übertragung des Belegungszustandes hat den Vorteil, daß in sehr flexibler Weise durch entsprechende Dateneinspeicherung im Speicher 9 von der Teilnehmereinrichtung her oder von der Zentrale her eine Auswahl eines bestimmten Anteils der gesamten Belegungsinformation möglich ist und die ausgewählten Daten beliebig manipuliert werden können.

Im folgenden wird eine weitere Ausführungsform beschrieben, bei der diese Flexibilität eingeschränkt ist, die dafür aber einen sehr viel einfacheren Aufbau der Statusempfänger besitzt.

Bei dieser Ausführungsform ist der in Fig. 1 dargestellte Statussender 4 gemäß Fig. 3 aufgebaut. Er besitzt außer dem Speicher 4.1' für die Belegungsinformation der Teilnehmereinrichtungen (TN) und den Vorrichtungen 4.2' für die Dekodierung und 4.3' für die Ablaufsteuerung und Zugriffssynchronisierung einen weiteren Speicher 4.4', der Informationen darüber enthält, welche Belegungsinformation den einzelnen Teilnehmereinrichtungen (TN) zugänglich gemacht werden soll. Dazu ist jeder der Teilnehmereinrichtungen 5.1 bis 5.n jeweils eine eigene Taktleitung 7.1 bis 7.n zugeordnet und es werden aus dem Speicher 4.4' auf jede der Taktleitungen 7.1 bis 7.n jeweils nur die Taktimpulse abgegeben, die dem Teil der Belegungsinformation zugeordnet sind, der von einer bestimmten Teilnehmereinrichtung empfangen werden soll.

Über die Datenleitung 6 werden weiterhin alle Daten über die Belegungsinformation in der bereits beschriebenen Weise abgegeben.

Die Statusempfänger dieser Ausführungsform sind gemäß Fig. 5 aufgebaut. In ihnen werden die über die Datenleitung 6 ankommenden Bits einer Verknüpfungslogik 10' zugeführt und liegen am Eingang eines Schieberegisters 11' an. Die beispielsweise über die Taktleitung 7.1 (für die Teilnehmereinrichtung 5.1) ankommenden vom Statussender bereits ausgewählten Taktimpulse werden direkt auf den Takteingang des Schieberegisters 11' gegeben, da eine Auswahl zugeordneter Taktimpulse nicht mehr erforderlich ist. Die parallelen Ausgänge des Schieberegisters 11' sind wiederum mit den Anzeigevorrichtungen der Teilnehmereinrichtung verbunden. Die Verknüpfungslogik 10' dient bei dieser Ausführungsform lediglich dazu, um an einem bestimmten Bit eines Datenpaketes eine Veränderung vorzunehmen. Hierzu werden die über die Taktleitung 7.1 eintreffenden Taktimpulse von einem Zähler 8' gezählt und die Zählnummer in einem an den Zähler 8' angeschlossenen Komparator 9' mit einem eingestellten Vergleichswert verglichen. Stimmen Zählnummer und der eingestellte Vergleichswert überein, so wird vom Komparator 9' ein Signal an die Verknüpfungslogik 10' gegeben, aufgrund dessen ein bestimmtes Bit des Belegungszustandes verändert werden kann, beispielsweise in der Weise, daß an der entsprechenden Anzeigevorrichtung ein intermittierendes Signal auftritt, das bei einer Wechsel-Lautsprechanlage beispielsweise durch Blinken der entsprechenden Lampe einen Anruf von einer bestimmten anderen Teilnehmereinrichtung signalisieren kann.

Die Rückstellung des Zählers 8' erfolgt in der bereits beschriebenen Weise über die monostabile Kippschaltung 12'.

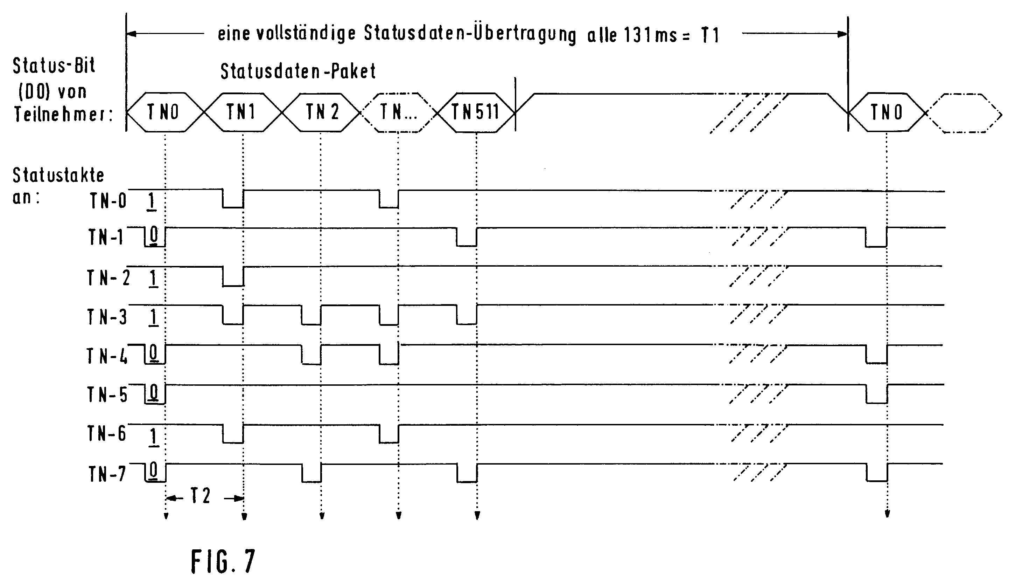

Zur Illustration des Zeitverhaltens der auf den einzelnen Taktleitungen abgegebenen Taktimpulse dient Fig. 7. In der obersten Zeile von Fig. 7 sind die den Belegungszustand aller Teilnehmereinrichtungen angebenden Daten TN0 bis TN511 in Datenpaket dargestellt. Der erste Takt, mit dem diese Datenpakete übertragen werden, kann beispielsweise 131ms betragen.

Auf den Zeilen darunter sind in Fig. 7 die ausgewählten Taktimpulse dargestellt, die die zuzuführende Teilinformation über den Belegungszustand für sieben verschiedene Teilnehmereinrichtungen TN-0 bis TN-7 darstellen. Aus der Zeichnung ist beispielsweise abzulesen, daß der Belegungszustand der Teilnehmereinrichtung TN-0 den Teilnehmereinrichtungen TN-1, TN-4, TN-5 und TN-7 mitgeteilt wird, nicht aber den Teilnehmereinrichtungen TN-2, TN-3 und TN-6. Andererseits kann man feststellen, daß der Teilnehmereinrichtung TN-7 beispielsweise mit jedem Datenpaket Informationen über den Belegungszustand der Teilnehmereinrichtungen TN-0, TN-2 und TN-511 übermittelt werden.

**Patentansprüche**

1. Verfahren zur Übertragung des Belegungszustandes in einem Kommunikationssystem, insbesondere in einer tastengesteuerten Wechsel- oder Gegen-Lautsprechanlage mit Linienwahl, das eine Zentrale aufweist, an welche mehrere Teilnehmereinrichtungen angeschlossen sind und bei dem die automatische Durchschaltung der Ruf- und Verbindungswege, sowie die Ermittlung des Belegungszustandes der Teilnehmereinrichtungen mittels eines in der Zentrale angeordneten Vermittlungsrechners gesteuert werden und bei dem von der Zentrale aus jeder Teilnehmereinrichtung Meldungen über den Belegungszustand mindestens eines Teils der übrigen Teilnehmereinrichtungen zugeführt werden, dadurch gekennzeichnet, daß die Daten über den jeweiligen Belegungszustand aller Teilnehmereinrichtungen als digitale Signale enthaltende Datenpakete mit einem ersten Takt auf eine Datenleitung gegeben werden, wobei jedes Datenpaket einen seriellen Bitstrom enthält, in dem jedes Bit den Belegungszustand genau einer Teilnehmereinrichtung repräsentiert und die Bits im Datenpaket in vorgegebener gleichbleibender Reihenfolge mit einem zweiten Takt angeordnet sind, dessen Frequenz um ein Vielfaches höher ist als die Frequenz des ersten Taktes und daß gleichzeitig auf mindestens eine Taktleitung Taktimpulse des zweiten Taktes gegeben werden, wobei jeder zu einem bestimmten Zeitpunkt des zweiten Taktes auftretende Taktimpuls genau einem an einer vorgegebenen Stelle des Datenpakets angeordneten Bit zugeordnet ist und zur Meldung des Belegungszustandes an eine Teilnehmereinrichtung jeweils aus der Datenleitung alle Daten der übertragenen Datenpakete entnommen und mit einem vorgegebenen Teil von dieser Teilnehmereinrichtung zugeordneten Taktimpulsen des zweiten Taktes snchronisiert werden zur Auswahl der ihnen zugeordneten Bits aus dem Datenpaket, welche zur Erzeugung von Steuersignalen verwendet werden, die parallel den Anzeigevorrichtungen der Teilnehmereinrichtung zugeführt werden.

2. Verfahren nach Anspruch 1, dadurch gekennzeichnet, daß die Taktimpulse des zweiten Taktes auf eine allen Teilnehmereinrichtungen gemeinsam zugeordnete Taktleitung gegeben werden und zur Meldung des Belegungszustandes an eine Teilnehmereinrichtung jeweils die ankommenden Taktimpulse gezählt und mit gespeicherten Taktmustern verglichen werden zur Auswahl der dieser Teilnehmereinrichtung zugeordneten Taktimpulse und Daten.

3. Verfahren nach Anspruch 1, dadurch gekennzeichnet, daß die Taktimpulse des zweiten Taktes vor der Abgabe den Teilnehmereinrichtungen zugeordnet und jeweils die einer Teilnehmereinrichtung zugeordneten Taktimpulse auf eine eigene Taktleitung gegeben werden, von der sie zur Meldung des Belegungszustandes an diese Teilnehmereinrichtung abgenommen werden.

4. Verfahren nach Anspruch 2, dadurch gekennzeichnet, daß zusätzlich zu den Taktmustern Daten gespeichert werden zur Realisierung weiterer logischer Verknüpfungen zwischen den seriell im Datenpaket übertragenen Bits und den ausgewählten Taktimpulsen.

5. Verfahren nach Anspruch 4, dadurch gekennzeichnet, daß die den ausgewählten Taktimpulsen zugeordneten Bits mit einem weiteren vorgegebenen Takt verknüpft werden zur Erzeugung intermittierender Belegungsinformationen.

6. Verfahren nach Anspruch 3, dadurch gekennzeichnet, daß die einer Teilnehmereinrichtung zugeordneten von der eigenen Taktleitung abgenommenen Taktimpulse gezählt und ihre Zählnummer mit einem Vergleichswert verglichen und bei Übereinstimmung das mit dem so ausgewählten Taktimpuls synchronisierte Bit in vorgegebener Weise verändert wird.

7. Einrichtung zur Durchführung des Verfahrens nach einem der Ansprüche 1 bis 6 in einen Kommunikationssystem, insbesondere einer tastengesteuerten Wechsel-oder Gegen-Lautsprechanlage mit Linienwahl, das eine Zentrale aufweist, an welche mehrere Teilnehmereinrichtungen angeschlossen sind und bei dem in der Zentrale ein Vermittlungsrechner angeordnet ist zur Steuerung der automatischen Durchschaltung der Ruf- und Verbindungswege sowie zur Ermittlung des Belegungszustandes der Teilnehmereinrichtungen und bei dem von der Zentrale aus jeder Teilnehmereinrichtungen Meldungen über den Belegungszustand mindestens eines Teils der übrigen Teilnehmereinrichtungen zugeführt werden, gekennzeichnet durch folgende Merkmale:
    a) In der Zentrale ist ein Statussender (4) angeordnet, dem vom Vermittlungsrechner (1) in vorgegebenen Zeitabständen jeweils aktualisierte Daten über den Belegungszustand sämtlicher Teilnehmereinrichtungen sowie Adressen und Steuersignale zugeführt werden;
    b) der Statussender (4) enthält mindestens einen Speicher (4.1, 4.1') für die Daten über den Belegungszustand sowie Vorrichtungen (4.2, 4,3; 4.2', 4.3') zur Decodierung der Adressen und Steuersignale und zur Ablaufsteuerung und Zugriffssynchronisierung;
    c) der Speicher (4.1, 4.1') des Statussenders (4) wird zyklisch mit einem ersten Takt (T1) ausgelesen, wobei mit dem ersten Takt Datenpakete auf eine Datenleitung (6) gegeben werden, die jeweils einen seriellen Bitstrom enthalten, in dem jedes Bit den Belegungszustand genau einer Teilnehmereinrichtung repräsentiert und die Bits im Datenpaket in vorgegebener gleichbleibender Reihenfolge mit einem zweiten Takt (T2) angeordnet sind, dessen Frequenz um ein Vielfaches höher ist als die Frequenz des ersten Taktes, wobei die Anzahl der einem Datenpaket zugeordneten Taktimpulse gleich der Gesamtanzahl der Teilnehmereinrichtungen ist und auf mindestens eine Taktleitung (7) Taktimpulse des zweiten Taktes (T2) gegeben werden;
    d) jeder Teilnehmereinrichtung ist ein Statusempfänger (5.1-5.n) zugeordnet, wobei alle Statusempfänger an die ihnen gemeinsame Datenleitung (6) sowie an eine Taktleitung (7) angeschlossen sind;
    e) in jedem Statusempfänger sind Vorrichtungen (10) zum Empfang der Daten, zum Empfang mindestens eines vorgegebenen Teils der Taktimpulse des zweiten Takts, zur Verknüpfung der Daten mit ihnen zugeordneten ausgewählten Taktimpulsen und zur Abgabe der derart ausgewählten Daten an parallele Ausgänge vorgesehen, wobei jedem Ausgang einer der ausgewählten Taktimpulse zugeordnet ist;
    f) die parallelen Ausgänge der Statusempfänger sind jeweils mit den Anzeigevorrichtungen der Teilnehmereinrichtungen verbunden.

8. Einrichtung nach Anspruch 7, dadurch gekennzeichnet, daß bei n-Teilnehmereinrichtungen für die Beziehung zwischen dem ersten und dem zweiten Takt gilt: n T2 <T1, wobei T1 und T2 die Taktzeiten des ersten bzw. zweiten Taktes sind.

9. Einrichtung nach Anspruch 7 oder 8, dadurch gekennzeichnet, daß alle Statusempfänger (5.1 bis 5.n) an eine ihnen gemeinsame Taktleitung (7) angeschlossen sind, wobei Daten und Taktimpulse über eine Verknüpfungslogik (10) einem Schieberegister (11) zugeführt werden, dessen parallele Ausgänge mit den Anzeigevorrichtungen der Teilnehmereinrichtungen verbunden sind, wobei zur Ansteuerung der Verknüpfungslogik (10) die Taktimpulse gleichzeitig einen Zähler (8) zugeführt werden und ihre Zählnummern als Adressen einem Speicher (9) zugeführt werden, dessen Ausgang die Verknüpfungslogik (10) ansteuert und der zu jedem Taktimpuls einen Dateneintrag enthält, welcher angibt, ob der Taktimpuls in der Verknüpfungslogik (10) unterdrückt oder an das Schieberegister (11) weitergegeben wird.

10. Einrichtung nach Anspruch 9, dadurch gekennzeichnet, daß die im Speicher (9) des Statusempfängers enthaltenen Daten zusätzliche weitere Informationen über die Verknüpfung der Taktsignale mit den seriell vom Statussender (4) übertragenen Daten enthalten.

11. Einrichtung nach Anspruch 10, dadurch gekennzeichnet, daß die seriell vom Statussender (4) übertragenen Daten in der Verknüpfungslogik (10) mit einem vorgegebenen Takt zur Erzeugung intermittierender Bewegungsinformationen verknüpft werden.

12. Einrichtung nach Anspruch 7 oder 8, dadurch gekennzeichnet, daß jeder Statusempfänger an eine eigene Taktleitung (7.1 bis 7.n) angeschlossen ist und im Statussender (4) ein weiterer Speicher (4.4') angeordnet ist, in welchem Daten für die Zuweisung bestimmter ausgewählter Taktimpulse an die einzelnen Teilnehmereinrichtungen eingespeichert sind, gemäß denen die Taktimpulse auf die Taktleitungen (7.1 bis 7.n) gegeben werden und im Statusempfänger Daten und Taktimpulse einem Schieberegister (11') zugeführt werden, dessen parallele Ausgänge mit den Anzeigevorrichtungen der Teilnehmereinrichtungen verbunden sind.

13. Einrichtung nach Anspruch 12, dadurch gekennzeichnet, daß die Daten dem Schieberegister (11') über eine Verknüpfungslogik (10') zugeführt werden, zu deren Ansteuerung die Taktimpulse gleichzeitig einem Zähler (8') zugeführt werden und ihre Zählnummern in einem Komparator (9') mit einem vorgegebenen Wert verglichen werden und bei Übereinstimmung der Verknüpfungslogik (10') ein das betreffende Bit des seriellen Datenstroms in vorgegebener Weise veränderndes Signal zugeführt wird.

14. Einrichtung nach Anspruch 9 oder 12, dadurch gekennzeichnet, daß zur Rücksetzung des Zählers (8, 8') die Taktimpulse einer monostabilen Kippschaltung (12, 12') zugeführt werden, deren Ausgang mit dem Rückstelleingang des Zählers (8, 8') verbunden ist und deren Rückfallzeit größer als n · T2 aber kleiner als T1 ist, wenn T1 und T2 die Taktzeiten des ersten bzw. zweiten Taktes sind und n die Gesamtanzahl der Taktimpulse des zweiten Taktes pro Zyklus ist.

EP 0 508 093 A2

**FIG.1**

FIG. 2

vom Vermittlungsrechner 1

Daten

Adressen

Steuerung

Decodierung — 4.2

Speicher für die
Belegungsinformation
der TN — 4.1

Ablaufsteuerung / Zugriffssynchronisierung — 4.3

zu den
TN

Takt — 7

Daten — 6

FIG. 3

vom Vermittlungsrechner 1

Daten

Adressen

Steuerung

Decodierung — 4.2'

Speicher für die
Zuweisung der Takte
an die TN — 4.4'

Speicher für die
Belegungsinformation
der TN — 4.1'

Ablaufsteuerung / Zugriffssynchronisierung — 4.3'

zu den
TN

n

Takte
7.1 - 7.n

Daten — 6

FIG.4

FIG.5

11

Takt

T1

zeitlich gedehnte Darstellung

T2

Takt

Daten

Bit 0 fuer Status TN 0 / Bit 1 fuer Status TN 1 / Bit 2 fuer Status TN 2 / Bit 3 fuer Status TN 3

FIG. 6

EP 0 508 093 A2

12

eine vollständige Statusdaten-Übertragung alle 131ms = T1

Statusdaten-Paket

Status-Bit
(DO) von
Teilnehmer:    TN0   TN1   TN 2   TN...   TN511   TN0

Statustakte
an:

TN-0  1
TN-1  0
TN-2  1
TN-3  1
TN-4  0
TN-5  0
TN-6  1
TN-7  0

T2

FIG. 7